# EUROPEAN PATENT SPECIFICATION

(11) **EP 4 205 997 B1**
(45) Date of publication and mention of the grant of the patent: **24.07.2024**
(21) Application number: 22207535.0
(22) Date of filing: 15.11.2022
(51) Int. Cl.: B60C 11/01, B60C 13/02

(54) **TIRE**
REIFEN
PNEUMATIQUE

(30) Priority: 28.12.2021 JP 2021214272
(43) Date of publication of application: 05.07.2023
(73) Proprietor: Sumitomo Rubber Industries, Ltd., Kobe-shi, Hyogo 651-0072 (JP)
(72) Inventor: NAKAJIMA, Sho, Kobe-shi, 651-0072 (JP)
(74) Representative: Manitz Finsterwald Patent- und Rechtsanwaltspartnerschaft mbB

(56) References cited:
- EP-A1- 3 798 025
- WO-A1-2021/070876
- JP-A- 2017 065 383
- US-A1- 2018 086 154
- US-A1- 2018 086 157

## Description

### BACKGROUND OF THE INVENTION

### Field of the Invention

The present invention relates to a tire.

### Background Art

JP 2013-082262 A discloses a pneumatic tire (hereinafter, may be simply referred to as a "tire"). This tire is provided with a plurality of protrusions disposed on a buttress portion between a tread portion and each sidewall portion along a tire circumferential direction, in order to improve on-snow performance.

In the above buttress portion, rubber volume is increased by the plurality of protrusions, thereby enhancing stiffness of the buttress portion. Accordingly, the stiffness difference between the buttress portion and the sidewall portion is large. Since such a stiffness difference causes local strain and leads to reduction in steering stability on a dry road surface, there is room for further improvement in steering stability performance.

US 2018/0086154 A1 discloses a tire having a buttress surface. Projections having different volumes are alternately formed on the buttress surface, and a gap is arranged between respectively adjacent projections. Other related tires are known from EP 3 798 025 A1, WO 2021/070876 A1, US 2018/0086157 A1, and JP 2017-065383 A.

The present invention has been made in view of the above circumstances, and a main object of the present invention is to provide a tire capable of improving on-snow performance and steering stability on a dry road surface.

### SUMMARY OF THE INVENTION

The present invention is directed to a tire including a buttress surface extending inward in a tire radial direction from a tread ground-contact end, wherein the tire has a plurality of line grooves recessed inward from the buttress surface and extending on the buttress surface and a plurality of ridges protruding outward from the buttress surface and extending on the buttress surface, and the line grooves and the ridges are alternately arranged.

As a result of adopting the above configuration, the tire according to the present invention can improve on-snow performance and steering stability on a dry road surface.

### BRIEF DESCRIPTION OF THE DRAWINGS

FIG. 1 is a tire meridian sectional view including the tire rotation axis of a tire in a normal state;
FIG. 2 is a perspective view of a shoulder land portion in FIG. 1;
FIG. 3 is a front view of a buttress surface including line grooves and ridges;
FIG. 4 is a sectional view taken along a line A-A in FIG. 3;
FIG. 5 is a partial sectional view of line grooves and ridges according to another embodiment of the present invention;
FIG. 6 is a front view of a buttress surface including line grooves and ridges according to another embodiment of the present invention;
FIG. 7 is a front view of a buttress surface including line grooves and ridges according to another embodiment of the present invention; and
FIG. 8 is a front view of a buttress surface of Comparative Example 1.

### DETAILED DESCRIPTION

Embodiments of the present invention will be described below in detail with reference to the drawings. It is to be understood that the drawings contain exaggerated expressions and expressions that differ from the dimensional ratio of the actual structure in order to help the understanding of the present invention. In addition, the same or common elements are denoted by the same reference characters throughout each embodiment, and the redundant description thereof is omitted. Furthermore, the specific configurations shown in the embodiment and the drawings are for understanding the contents of the present invention, and the present invention is not limited to the specific configurations shown.

### [Tire (First Embodiment)]

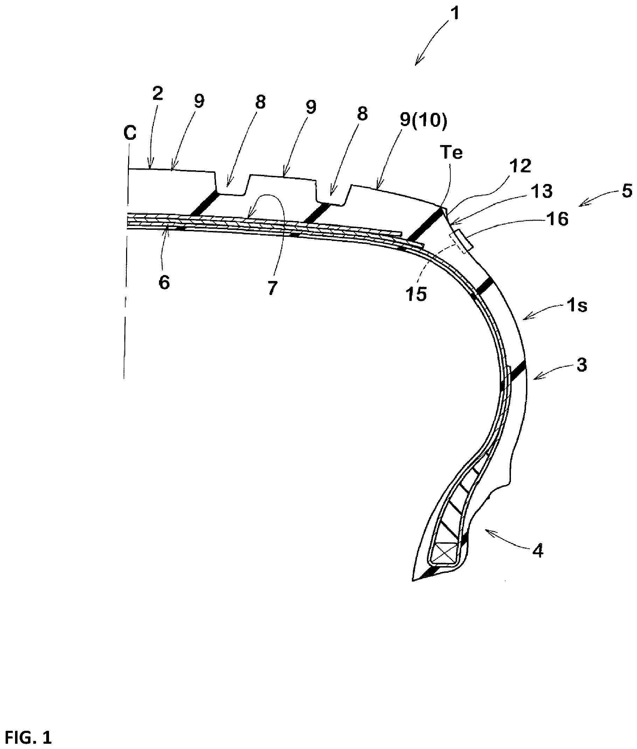

FIG. 1 shows an example of a tire meridian cross-section including the tire rotation axis of a tire in a normal state according to the present embodiment. In FIG. 1, an alternate long and short dash line indicates a tire equator (equatorial plane) C.

A tire 1 according to the present embodiment is, for example, preferably used as a pneumatic tire for a passenger car. However, the present invention is not limited thereto, and may be, for example, applied to a heavy-duty pneumatic tire or a non-pneumatic tire (airless tire) the interior of which is not filled with pressurized air. In addition, the tire 1 of the present embodiment is preferably used as a winter tire. The winter tire means the tire 1 suitable for running on snow, including a studless tire, a snow tire, a tire for all seasons, and the like.

The "normal state" refers to a state in which the tire 1 is fitted to a normal rim (hereinafter, may be simply referred to as a "rim") and is inflated to a normal internal pressure, and no load is applied to the tire 1. Hereinafter, dimensions of parts of the tire 1 and the like are values measured in the normal state, unless otherwise noted.

In a standard system including a standard on which the tire 1 is based, the "normal rim" is a rim that is defined for each tire by the standard, and is, for example, the "standard rim" in the JATMA standard, the "Design Rim" in the TRA standard, or the "Measuring Rim" in the ETRTO standard.

In a standard system including a standard on which the tire 1 is based, the "normal internal pressure" is an air pressure that is defined for each tire by the standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The tire 1 of the present embodiment includes a tread portion 2, a pair of sidewall portions 3 respectively extending inward from end portions of the tread portion 2 in a tire radial direction, and bead portions 4 formed inward of the respective sidewall portions 3 in the tire radial direction. The tire 1 of the present embodiment has therein, for example, a carcass 6 and a belt layer 7. Known structures are used for these components.

### [Tread Portion]

The tread portion 2 of the present embodiment is formed so as to include a plurality of circumferential grooves 8 extending continuously in a tire circumferential direction, and land portions 9 demarcated by the circumferential grooves 8. The land portion 9 may be, for example, divided into a plurality of blocks by lateral grooves (not shown) extending in a direction intersecting the circumferential grooves 8.

From among land portions 9 of the present embodiment, a shoulder land portion 10 including a tread ground-contact end Te is provided. The tread ground-contact ends Te are defined as ground contact positions (except for protruding portions 12 described below) at the outermost sides in the tire axial direction, when a normal load is applied to the above tire 1 in the normal state and the tire 1 is brought into contact with a flat surface at a camber angle of 0°.

In a standard system including a standard on which the tire is based, the "normal load" is a load that is defined by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

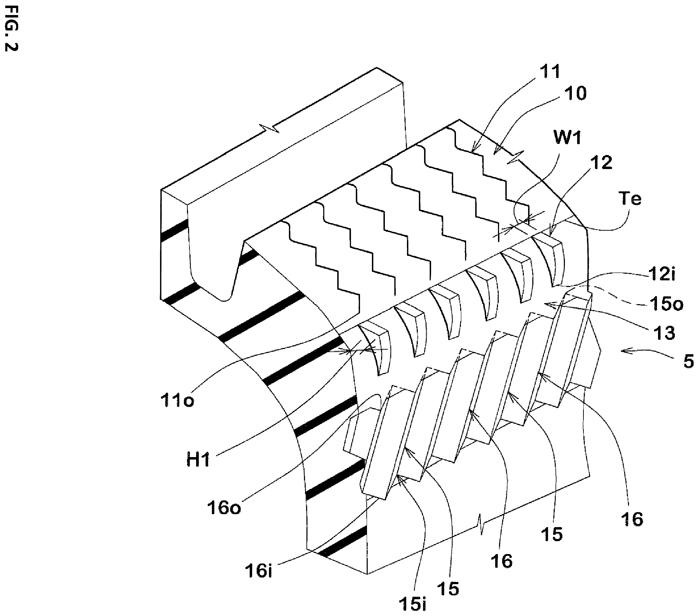

FIG. 2 is a perspective view of the shoulder land portion 10 in FIG. 1. The shoulder land portion 10 of the present embodiment is provided with sipes 11 and the protruding portions 12. The sipes 11 and the protruding portions 12 of the present embodiment are provided at intervals in the tire circumferential direction. The "sipe" has a width of less than 1.5 mm, and is distinguished from the circumferential groove 8 or the lateral groove (not shown) having a groove width of 1.5 mm or more.

### [Sipe]

The sipes 11 of the present embodiment extend in the tire axial direction. However, the sipes 11 are not limited thereto. The sipes 11 may, for example, extend in the tire circumferential direction. In addition, the sipes 11 of the present embodiment extend in a zigzag manner in a longitudinal direction, but are not limited thereto. The sipes 11 may, for example, linearly extend. Such sipes 11 enhance edge components in the shoulder land portion 10, thereby improving the on-ice performance.

### [Protruding Portion]

As shown in FIG. 1 and FIG. 2, the protruding portions 12 of the present embodiment protrude from a tire outer surface 1s (buttress surface 13). As shown in FIG. 2, the protruding portions 12 of the present embodiment are disposed outward of outer ends 11o in the tire axial direction of the sipes 11 and the tread ground-contact end Te, in the tire axial direction. Furthermore, inner ends 12i of the protruding portions 12 in the tire radial direction terminate without reaching line grooves 15 and ridges 16 described below. Such protruding portions 12 allow a ground contact area to be increased during cornering and can improve the cornering performance on an ice and snow road. A width W1 of each protruding portion 12 is, for example, set to about 0.5 to 7.0 mm. A maximum height H1 of each protruding portion 12 is, for example, set to about 2.0 to 5.0 mm.

### [Buttress Surface]

As shown in FIG. 1, the tire 1 of the present embodiment includes the buttress surfaces 13 each extending inward in the tire radial direction from the tread ground-contact end Te. Each buttress surface 13 is provided on a buttress portion 5 between the tread portion 2 and each sidewall portion 3.

As shown in FIG. 2, the buttress surface 13 of the present embodiment is provided with a plurality of the line grooves 15 and a plurality of the ridges 16. The line grooves 15 and the ridges 16 are alternatively arranged. The line grooves 15 and the ridges 16 of the present embodiment are provided in the buttress surfaces 13 disposed on both sides in the tire axial direction, but may be provided only in the buttress surface 13 disposed on one side.

### [Line groove]

The plurality of line grooves 15 of the present embodiment are recessed inward from the buttress surface 13 and extend on the buttress surface 13. When the protruding portions 12, the line grooves 15, and the ridges 16 are provided as in the present embodiment, the tire outer surface (a virtual plane of the tire outer surface 1s (shown in FIG. 1) smoothly continued) except for areas where the protruding portions 12, the line grooves 15, and the ridges 16 are respectively formed is defined as the buttress surface 13, in the buttress portion 5 of the tire 1.

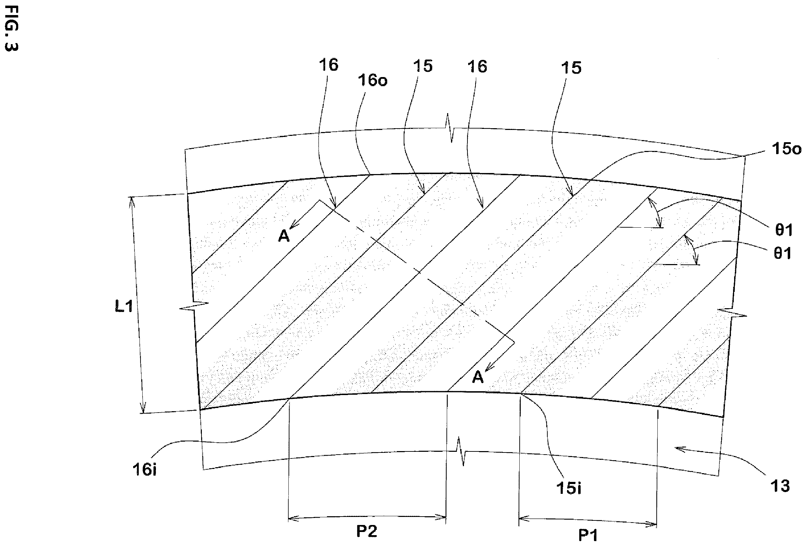

FIG. 3 is a front view of the buttress surface 13 including the line grooves 15 and the ridges 16. In FIG. 3, the line grooves 15 are shaded so as to be easily discriminated from the ridges 16. Each line groove 15 of the present embodiment linearly extends between an outer end 15o and an inner end 15i thereof in the tire radial direction, as viewed from a front of the buttress surface 13. Each line groove 15 may be at least partially curved between the outer end 15o and the inner end 15i thereof. As shown in FIG. 2, the outer end 15o of each line groove 15 of the present embodiment is provided inward of the tread ground-contact end Te and the inner end 12i of the protruding portion 12 in the tire radial direction.

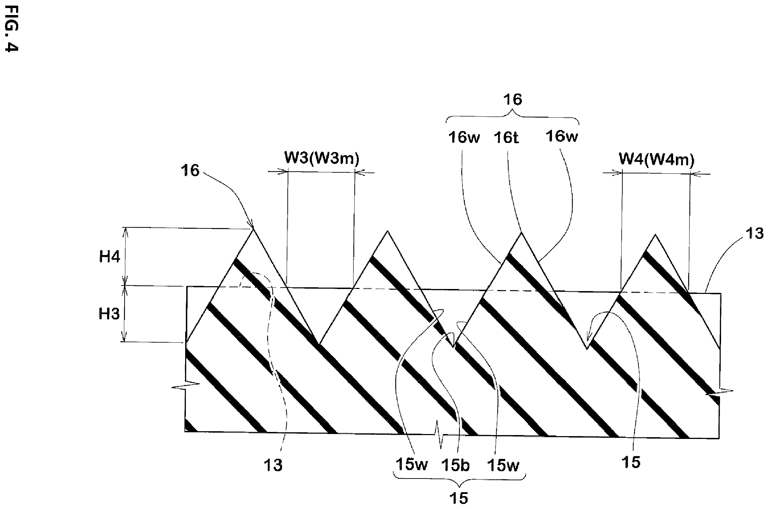

FIG. 4 is a sectional view taken along a line A-A in FIG. 3. Each line groove 15 of the present embodiment is formed so as to include a pair of groove walls 15w and 15w, and a groove bottom 15b continuous with the groove walls 15w and 15w, in a cross section orthogonal to the longitudinal direction of each line groove 15. Each line groove 15 of the present embodiment has a groove width W3 that is gradually reduced from the buttress surface 13 toward the inner side (the groove bottom 15b side), and a triangle-shaped cross section.

### [Ridge]

As shown in FIG. 2, the plurality of ridges 16 of the present embodiment protrude outward from the buttress surface 13 and extend on the buttress surface 13. As shown in FIG. 3, each ridge 16 of the present embodiment linearly extends between an outer end 16o and an inner end 16i thereof in the tire radial direction as viewed from the front of the buttress surface 13, in the same manner as the line groove 15. Each ridge 16 may be at least partially curved between the outer end 16o and the inner end 16i thereof. As shown in FIG. 2, the outer end 16o of each ridge 16 of the present embodiment is provided inward of the tread ground-contact end Te and the inner end 12i of the protruding portion 12 in the tire radial direction.

As shown in FIG. 4, each ridge 16 of the present embodiment is formed so as to include a pair of side walls 16w and 16w and a tip portion 16t continuous with the side walls 16w and 16w, in the cross section orthogonal to the longitudinal direction of each ridge 16. Each ridge 16 of the present embodiment has a width W4 that is gradually reduced from the buttress surface 13 toward the outer side (the tip portion 16t side), and a triangle-shaped cross section.

### [Function of Tire]

In the tire 1 of the present embodiment, large snow columns can be formed in the line grooves 15 each sandwiched by a pair of the ridges 16 and 16 during running on a deep snowy road surface, by the line grooves 15 and the ridges 16 which are alternatively arranged in the buttress surfaces 13 as shown in FIG. 2 to FIG. 4. Accordingly, the tire 1 can obtain great traction by shearing the large snow columns. Therefore, the on-snow performance (traction performance) is improved.

Furthermore, in the tire 1 of the present embodiment, rubber volume decreased by the plurality of line grooves 15 recessed inward from the buttress surface 13 is compensated for by the plurality of ridges 16 protruding outward from the buttress surface 13. Accordingly, in the tire 1 of the present embodiment, the stiffness difference between the buttress portion 5 provided with the line grooves 15 and the ridge 16, and the sidewall portion 3 (shown in FIG. 1) disposed inward of the buttress portion 5 in the tire radial direction is restrained from becoming large, and occurrence of local strain between the buttress portion 5 and the sidewall portion 3 is prevented. Therefore, in the tire 1 of the present embodiment, the steering stability on a dry road surface is improved.

As shown in FIG. 2, the outer end 15o of each line groove 15 of the present embodiment is located inward of the inner end 12i of the protruding portion 12 in the tire radial direction. Accordingly, the rubber volume decreased by the plurality of line grooves 15 is also compensated for by the protruding portion 12, thereby improving the steering stability on a dry road surface.

As shown in FIG. 2 and FIG. 3, the longitudinal direction of each of the line grooves 15 and the ridges 16 of the present embodiment is inclined relative to the tire circumferential direction. Accordingly, snow columns formed in the line grooves 15 each sandwiched by a pair of the ridges 16 and 16 are effectively sheared, thereby improving the on-snow performance.

As shown in FIG. 3, angles θ1 of the longitudinal directions of each line groove 15 and each ridge 16 relative to the tire circumferential direction are preferably set to 20 to 70 degrees. When each angle θ1 is set to 20 degrees or more, snow columns formed in the line grooves 15 each sandwiched by a pair of the ridges 16 and 16 are effectively sheared, thereby improving the grip performance during cornering or the like on a deep snowy road surface and the on-snow performance. On the other hand, when each angle θ1 is set to 70 degrees or less, angles at which the longitudinal directions of each line groove 15 and each ridge 16 intersect the tire circumferential direction (a rotation direction of the tire) are restrained from becoming large. Accordingly, strain in the buttress portion 5 generated during the rotation of the tire is restrained from becoming large, in the line grooves 15 each sandwiched by a pair of the ridges 16 and 16, thereby maintaining the steering stability on a dry road surface. To effectively achieve such functions, the angle θ1 is preferably not less than 30 degrees and preferably not more than 60 degrees.

As shown in FIG. 4, a maximum depth H3 of each line groove 15 and a maximum height H4 of each ridge 16 are preferably set to 0.5 to 4.0 mm. When the maximum depth H3 and the maximum height H4 are set to 0.5 mm or more, large snow columns are formed in the line grooves 15 each sandwiched by a pair of the ridges 16 and 16, thereby improving the on-snow performance. On the other hand, when the maximum depth H3 and the maximum height H4 are set to 4.0 mm or less, the stiffness difference between portions where the line grooves 15 are provided and portions where the ridges 16 are provided in the buttress portion 5 is restrained from becoming large, thereby maintaining the steering stability on a dry road surface. From such a viewpoint, the maximum depth H3 and the maximum height H4 are preferably not less than 0.5 mm and preferably not more than 4.0 mm.

From the same viewpoint as the maximum depth H3 of each line groove 15 and the maximum height H4 of each ridge 16, a maximum groove width W3m of each line groove 15 and a maximum width W4m of each ridge 16 are preferably not less than 0.5 mm and more preferably not less than 5.0 mm, and preferably not more than 20.0 mm and more preferably not more than 15.0 mm.

As shown in FIG. 3, an arrangement pitch P1 for the plurality of line grooves 15 in the tire circumferential direction and an arrangement pitch P2 for the plurality of ridges 16 in the tire circumferential direction are preferably set to 2.0 to 10.0 mm. When the arrangement pitches P1 and P2 are set to 10.0 mm or less, more snow columns are formed in the line grooves 15 each sandwiched by a pair of the ridges 16 and 16, thereby improving the on-snow performance. On the other hand, when the arrangement pitches P1 and P2 are set to 2.0 mm or more, the maximum groove width W3m of each line groove 15 and the maximum width W4m of each ridge 16 are restrained from becoming small, and thus large snow columns can be formed. From such a viewpoint, the arrangement pitches P1 and P2 are preferably not less than 4.0 mm and preferably not more than 8.0 mm.

A length L1 of each of the line grooves 15 and the ridges 16 in the tire radial direction is preferably set to 10.0 to 30.0 mm. When the length L1 is set to 10.0 mm or more, snow columns are assuredly formed in the line grooves 15 each sandwiched by a pair of the ridges 16 and 16, thereby improving the on-snow performance. On the other hand, when the length L1 is set to 30.0 mm or less, each line groove 15 and each ridge 16 are restrained from being formed over a wide range in the tire radial direction, thereby improving the steering stability on a dry road surface.

A ratio V1/V2 of a total volume V1 of the plurality of line grooves 15 to a total volume V2 of the plurality of ridges is preferably set to 0.7 to 1.3. The total volume V1 is a value obtained by calculating the volume of each line groove 15 (the volume of the space surrounded by the buttress surface 13, the groove walls 15w and 15w of the line groove 15, and the groove bottom 15b of the line groove 15 shown in FIG. 4) and adding up the volumes of all the line grooves 15. On the other hand, the total volume V2 is a value obtained by calculating the volume of each ridge 16 (the volume of the space surrounded by the buttress surface 13, the side walls 16w and 16w of the ridge 16, and the tip portion 16t of the ridge 16 shown in FIG. 4) and adding up the volumes of all the ridges 16.

When the ratio V1/V2 is set to 0.7 or more, a proportion of the ridges 16 to the line grooves 15 is restrained from becoming larger than required, while the rubber volume decreased by the plurality of line grooves 15 is compensated for. Accordingly, the steering stability on a dry road surface is improved, while the on-snow performance is maintained. On the other hand, when the ratio V1/V2 is set to 1.3 or less, a proportion of the line grooves 15 to the ridges 16 is restrained from becoming larger than required, while the rubber volume decreased by the plurality of line groove 15 is compensated for. Therefore, the on-snow performance is improved, while the steering stability on a dry road surface is maintained. From such a viewpoint, the ratio V1/V2 is preferably not less than 0.8 and preferably not more than 1.2.

The total volume V1 of the plurality of line grooves 15 may be set to be less than the total volume V2 of the plurality of ridges 16. Accordingly, stiffness reduction in the buttress portion 5 by the line grooves 15 is assuredly restrained, and the steering stability on a dry road surface is improved. In this case, the ratio V1/V2 is preferably not more than 0.9, and preferably not less than 0.7.

### [Tire (Second Embodiment)]

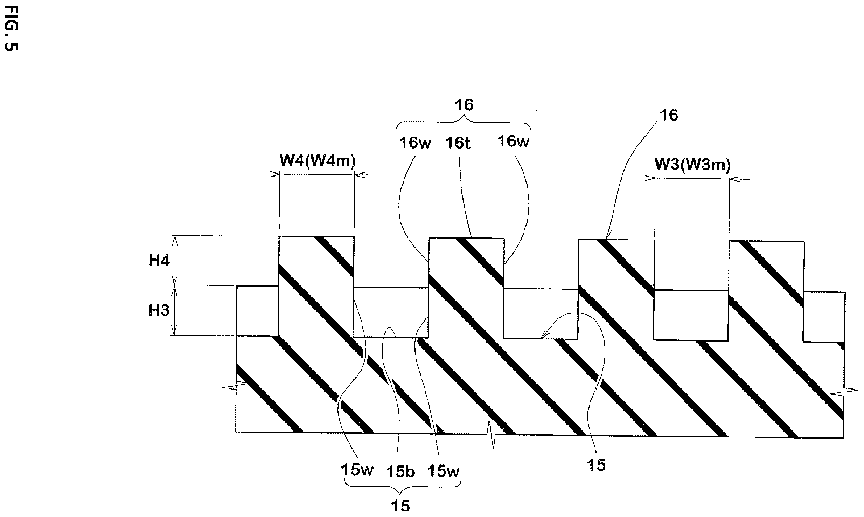

In the first embodiment, a cross-sectional shape of each of the line grooves 15 and the ridges 16 is a triangle as shown in FIG. 4, but the present invention is not limited thereto. FIG. 5 is a partial sectional view of line grooves 15 and ridges 16 according to a second embodiment of the present invention.

In a tire 1 of this embodiment, a cross-sectional shape of each of the line grooves 15 and the ridges 16 is a rectangle. Such a tire 1 allows firm rectangular snow columns to be formed in the line grooves 15 each sandwiched by a pair of the ridges 16 and 16, and can obtain great traction by shearing the snow columns. Therefore, the tire 1 of this embodiment can improve the on-snow performance.

The cross-sectional shape of each of the line grooves 15 and the ridges 16 may be, for example, a trapezoid (not shown). In this case, each line groove 15 may have a groove width W3 that is gradually reduced or increased from the buttress surface 13 toward the inner side (groove bottom 15b side). Such a tire 1 can strongly compact the snow columns toward the groove bottoms 15b of the line grooves 15, thereby improving the on-snow performance.

### [Tire (Third Embodiment)]

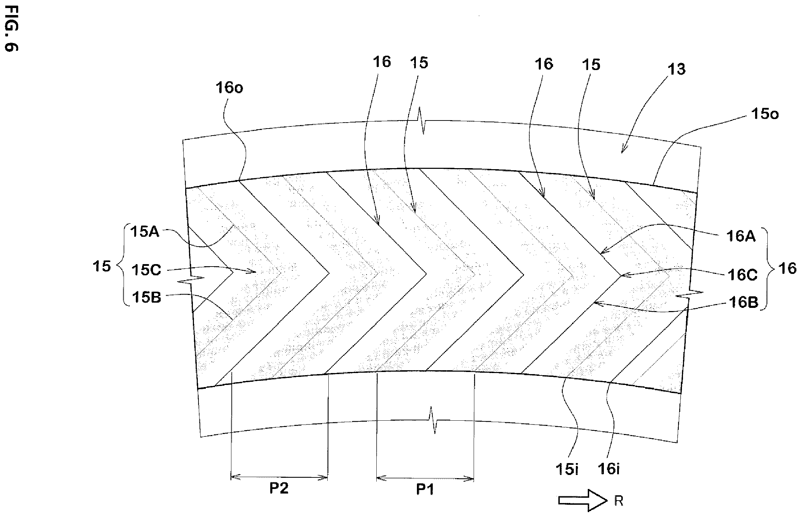

In the first and second embodiments, each of the line grooves 15 and each of the ridges 16 linearly extends (linearly between the outer end 15o and the inner end 15i and between the outer end 16o and the inner end 16i, respectively) as viewed from the front of the buttress surface 13 as shown in FIG. 3, but the present invention is not limited thereto. Each of the line grooves 15 and the ridges 16 may be, for example, bent relative to the tire radial direction as viewed from the front of the buttress surface 13. FIG. 6 is a front view of a buttress surface 13 including line grooves 15 and ridges 16 of a third embodiment of the present invention.

Each line groove 15 of this embodiment is formed so as to include a first inclined line groove 15A and a second inclined line groove 15B. Each first inclined line groove 15A extends inward from the outer end 15o of the line groove 15 in the tire radial direction, so as to be inclined on one side in the tire circumferential direction. On the other hand, each second inclined line groove 15B extends from the inner end (a bent portion 15C) of the first inclined line groove 15A in the tire radial direction toward the inner end 15i of the line groove 15, so as to be inclined on the other side in the tire circumferential direction. Each of the first inclined line grooves 15A and the second inclined line grooves 15B linearly extends. Accordingly, each line groove 15 is provided with the bent portion 15C protruding on the one side in the tire circumferential direction, between the first inclined line groove 15A and the second inclined line groove 15B, and is formed in a V shape as viewed from the front of the buttress surface 13.

Each ridge 16 of the embodiment is formed so as to include a first inclined ridge 16A and a second inclined ridge 16B. Each first inclined ridge 16A extends inward from the outer end 16o of the ridge 16 in the tire radial direction, so as to be inclined on one side in the tire circumferential direction. On the other hand, each second inclined ridge 16B extends from the inner end (a bent portion 16C) of the first inclined ridge 16A in the tire radial direction toward the inner end 16i of the ridge 16, so as to be inclined on the other side in the tire circumferential direction. Each of the first inclined ridges 16A and the second inclined ridges 16B linearly extends. Accordingly, each ridge 16 is provided with the bent portion 16C protruding on the one side in the tire circumferential direction, between the first inclined ridge 16A and the second inclined ridge 16B, and is formed in a V shape as viewed from the front of the buttress surface 13.

In the tire 1 of the embodiment, firm bent (V-shaped, in the embodiment) snow columns can be formed in the line grooves 15 each sandwiched by a pair of the ridges 16 and 16, by the line grooves 15 and the ridges 16 bent relative to the tire radial direction. Since such snow columns are strongly compacted toward the bent portions 15C, a large snow column shear force is achieved, thereby improving the on-snow performance.

In the embodiment, one bent portion 15C and one bent portion 16C are respectively provided to one line groove 15 and one ridge 16, but the numbers are not limited thereto and a plurality of the bent portions 15C and a plurality of the bent portions 16C may be respectively provided to one line groove 15 and one ridge 16. Accordingly, the line grooves 15 and the ridges 16 are formed in a zigzag shape, and thus firmer snow columns can be formed, thereby improving the on-snow performance.

When the line grooves 15 and the ridges 16 are bent relative to the tire radial direction as in the embodiment, a rotation direction R of the tire may be specified. The rotation direction R is indicated with characters or symbols on each sidewall portion 3 (shown in FIG. 1), for example.

The rotation direction R of the embodiment is specified such that, in each line groove 15 and each ridge 16, the bent portions 15C and 16C are the first to come, respectively. Accordingly, in the tire 1 of the embodiment, snow can be collected in and out of each of the line grooves 15 and the ridges 16 in the tire radial direction without releasing the snow and firm snow columns can be formed, in the braking operation during running straight or cornering . Accordingly, the braking performance of the tire 1 on a snowy road surface is improved.

The rotation direction R may be specified such that, in each line groove 15 and each ridge 16, the bent portions 15C and 16C are the last to come, respectively. Accordingly, in the tire 1 of the embodiment, firm snow columns can be formed in the braking operation during running straight or cornering. Therefore, the driving performance of the tire 1 on a snowy road surface is improved.

### [Tire (Fourth Embodiment)]

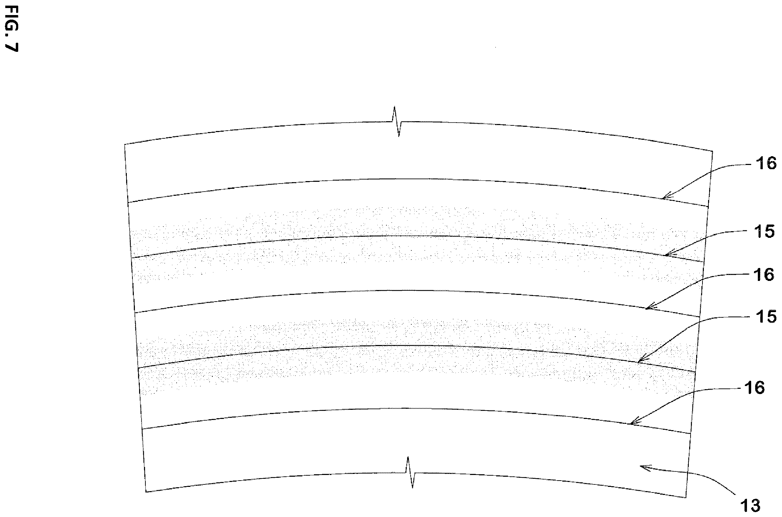

In the first to third embodiments, the longitudinal direction of each of the line grooves 15 and the ridges 16 is inclined relative to the tire circumferential direction, but the present invention is not limited thereto. FIG. 7 is a front view of a buttress surface 13 including line grooves 15 and ridges 16 according to a fourth embodiment of the present invention.

The longitudinal direction of each of the line grooves 15 and the ridges 16 of this embodiment is set so as to be parallel to the tire circumferential direction. In such a tire 1, strain in a buttress portion 5 generated during the rotation of the tire is restrained from becoming large in the line grooves 15 each sandwiched by a pair of the ridges 16 and 16, thereby maintaining the steering stability on a dry road surface.

Although the particularly preferred embodiments of the present invention have been described in detail above, the present invention is not limited to the above-described embodiments, and various modifications can be made to implement the present invention within the scope of the appended claims.

### EXAMPLES

### [Example A]

Tires each having the basic structure shown in FIG. 1 and a plurality of line grooves and a plurality of ridges were produced as samples according to the specifications in Table 1 (Examples 1 to 7). The angles θ1 of the line grooves and the ridges in Examples 1 to 5 are different from each other. In Example 6, the line grooves and the ridges were bent relative to the tire radial direction as viewed from the front of the buttress surface, as shown in FIG. 6. In Example 7, the longitudinal direction of each of the line grooves and the ridges was set to be parallel to the tire circumferential direction, as shown in FIG. 7.

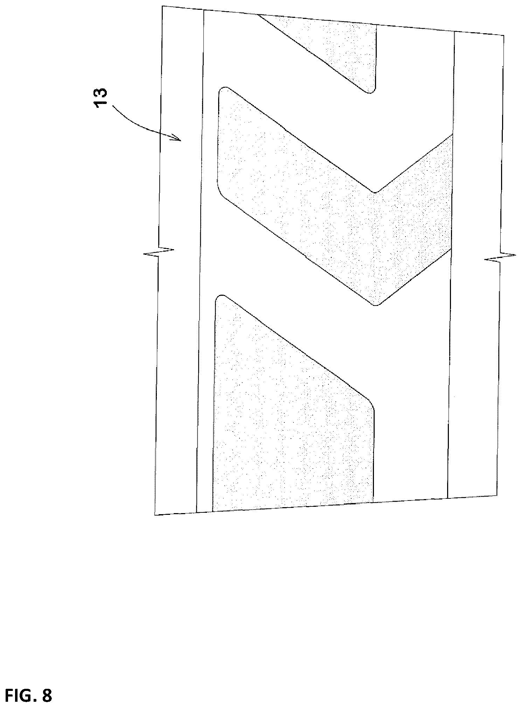

For comparison, a tire (Comparative Example 1) in which the line grooves and the ridges were omitted and only recessed parts were provided in the buttress surface as shown in FIG. 8, and a tire (Comparative Example 2) in which only the line grooves in the buttress surface were provided were produced as samples.

Then, each of the tires produced as samples was evaluated for steering stability on a dry road surface and on-snow performance. The specifications for each tire are the same except for configurations described in Table 1, and the tire sizes and the like are as follows. In addition, the test methods are as follows. The results of the tests are shown in Table 1.
Tire size: 195/65R15
Rim size: 15×6.5
Internal pressure:
   Front wheel: 250 kPa
   Rear wheel: 240 kPa
Vehicle: Passenger car (hybrid vehicle manufactured in Japan)
Tire mounted position: all wheels
Line groove:
   Maximum depth H3: 1.0 mm
   Maximum groove width W3m: 5.0 mm
Ridge:
   Maximum height H4: 1.0 mm
   Maximum width W4m: 5.0 mm
Total volume V1 of Line grooves / Total volume V2 of Ridges: 0.8 (Examples 1 to 7)

### <Steering stability on dry road surface>

Sensory evaluation was made by a driver for steering stability when the driver drove the above test vehicle on a dry road surface. The results are scores obtained on the basis of the result of Comparative Example 1 being 100. A higher value indicates better steering stability on the dry road surface. As for the scores, 95 points or more is acceptable, and 98 points or more is more preferable.

### <On-snow performance>

Sensory evaluation was made by a driver for traction performance when the driver drove the above test vehicle on a snowy road. The results are scores obtained on the basis of the result of Comparative Example 1 being 100. A higher value indicates better steering stability on the snowy road. As for the scores, 95 points or more is acceptable, and 98 points or more is more preferable.

**[Table 1]**

| | Comp. Ex. 1 | Comp. Ex. 2 | Ex. 1 | Ex. 2 | Ex. 3 | Ex. 4 | Ex. 5 | Ex. 6 | Ex. 7 |
|---|---|---|---|---|---|---|---|---|---|
| Front view of buttress surface | FIG. 8 | - | FIG. 3 | FIG. 3 | FIG. 3 | FIG. 3 | FIG. 3 | FIG. 6 | FIG. 7 |
| Angles θ1 (degrees) of longitudinal directions of grooves and projections | - | 45 | 10 | 20 | 45 | 70 | 80 | 45 | 0 |
| Steering stability on dry road surface (score) | 100 | 85 | 100 | 100 | 100 | 100 | 95 | 100 | 100 |
| On-snow performance (score) | 100 | 105 | 104 | 106 | 108 | 108 | 110 | 109 | 105 |
| Total score | 200 | 190 | 204 | 206 | 208 | 208 | 205 | 209 | 205 |

According to the test results, in the Examples, the on-snow performance was improved compared to that in Comparative Examples 1 and 2, and also, the steering stability on a dry road surface was improved compared to that in Comparative Example 2. Furthermore, in each of Examples 2 to 4 in which the angle θ1 was set in a preferable range, the steering stability performance on a dry road surface and the on-snow performance were improved in a well-balanced manner, compared to those in each of Examples 1 and 5 in which the angle θ1 was set outside of the preferable range.

### [Example B]

Tires each having the basic structure shown in FIG. 1 and a plurality of line grooves and a plurality of ridges were produced as samples according to the specifications in Table 2 (Examples 3, and 8 to 11). The ratios V1/V2 of the total volumes V1 of the line grooves to the total volumes V2 of the ridges in Examples 3, and 8 to 11 are different from each other.

Then, each of the tires produced as samples was evaluated for steering stability on a dry road surface and on-snow performance. The specifications for each tire are the same except for configurations described in Table 2, and the tire sizes and the like are the same as those in Example A except for the following. In addition, the test methods are the same as those in Example A. The results of the tests are shown in Table 2.
Front view of buttress surface: FIG. 3
Angles θ1 (degrees) of longitudinal directions of line grooves and ridges: 45 degrees

**[Table 2 ]**

| | Ex. 8 | Ex. 9 | Ex. 3 | Ex. 10 | Ex. 11 |
|---|---|---|---|---|---|
| Ratio (V1/V2) of total volume V1 of grooves to total volume V2 of projections | 0.6 | 0.7 | 0.9 | 1.3 | 1.4 |
| Steering stability on dry road surface (score) | 102 | 101 | 100 | 99 | 96 |
| On-snow performance (score) | 103 | 107 | 108 | 108 | 109 |
| Total score | 205 | 208 | 208 | 207 | 205 |

According to the test results, in the Examples, the on-snow performance was improved compared to that in Comparative Examples 1 and 2, and also, the steering stability on a dry road surface was improved compared to that in Comparative Example 2. Furthermore, in each of Examples 3, 9, and 10 in which the ratio V1/V2 of the total volume V1 of the line grooves to the total volume V2 of the ridges was set in a preferable range, the steering stability performance on a dry road surface and the on-snow performance were improved in a well-balanced manner, compared to those in the other Examples.

### [Example C]

Tires each having the basic structure shown in FIG. 1 and a plurality of line grooves and a plurality of ridges were produced as samples according to the specifications in Table 3 (Examples 3, and 12 to 19). The maximum depths H3 and the maximum groove widths W3m of the line grooves and the maximum heights H4 and the maximum widths W4m of the ridges in Examples 3, and 12 to 19 are different from each other.

Then, each of the tires produced as samples was evaluated for steering stability on a dry road surface and on-snow performance. The specifications for each tire are the same except for configurations described in Table 3, and the tire sizes and the like are the same as those in Example A except for the following. In addition, the test methods are the same as those in Example A. The results of the tests are shown in Table 3.
Front view of buttress surface: FIG. 3
Angles θ1 (degrees) of longitudinal directions of line grooves and ridges: 45 degrees

**[Table 3]**

| | Ex. 12 | Ex. 13 | Ex. 3 | Ex. 14 | Ex. 15 | Ex. 16 | Ex. 17 | Ex. 18 | Ex. 19 |
|---|---|---|---|---|---|---|---|---|---|
| Maximum depth H3 (mm) of groove | 0.4 | 0.5 | 1.0 | 4.0 | 5.0 | 1.0 | 1.0 | 1.0 | 1.0 |
| Maximum height H4 (mm) of projection | | | | | | | | | |
| Maximum groove width W3m (mm) of groove | 5.0 | 5.0 | 5.0 | 5.0 | 5.0 | 0.4 | 0.5 | 20.0 | 21.0 |
| Maximum width W4m (mm) of projection | | | | | | | | | |
| Steering stability on dry road surface (score) | 102 | 101 | 100 | 99 | 98 | 103 | 102 | 99 | 97 |
| On-snow performance (score) | 105 | 107 | 108 | 109 | 109 | 104 | 106 | 109 | 110 |
| Total score | 207 | 208 | 208 | 208 | 207 | 207 | 208 | 208 | 207 |

According to the test results, in the Examples, the on-snow performance was improved compared to that in Comparative Examples 1 and 2, and also, the steering stability on a dry road surface was improved compared to that in Comparative Example 2. Furthermore, in each of Examples 3, 13, 14, 17, and 18 in which the maximum depth H3 and the maximum groove width W3m of the line groove and the maximum height H4 and the maximum width W4m of the ridge were set in a preferable range, the steering stability performance on a dry road surface and the on-snow performance were improved in a well-balanced manner, compared to those in the other Examples.

## Claims

1. A tire (1) comprising
a buttress surface (13) extending inward in a tire radial direction from a tread ground-contact end (Te), wherein
the tire (1) has a plurality of line grooves (15) recessed inward from the buttress surface (13) and extending on the buttress surface (13) and a plurality of ridges (16) protruding outward from the buttress surface (13) and extending on the buttress surface (13), and
the line grooves (15) and the ridges (16) are alternately arranged, wherein the tread ground-contact ends (Te) are defined as ground contact positions at the outermost sides in the tire axial direction, when a normal load is applied to the tire (1) in the normal state and the tire (1) is brought into contact with a flat surface at a camber angle of 0°.

2. The tire (1) according to claim 1, wherein a longitudinal direction of each of the line grooves (15) and the ridges (16) is inclined relative to a tire circumferential direction.

3. The tire (1) according to claim 2, wherein an angle (θ1) of the longitudinal direction relative to the tire circumferential direction is 20 to 70 degrees.

4. The tire (1) according to claim 2 or 3, wherein each line groove (15) and each ridge (16) are bent relative to the tire radial direction, as viewed from a front of the buttress surface (13).

5. The tire (1) according to claim 1, wherein a longitudinal direction of each of the line grooves (15) and the ridges (16) is parallel to a tire circumferential direction.

6. The tire (1) according to any one of claims 1 to 5, wherein a ratio (V1/V2) of a total volume (V1) of the plurality of line grooves (15) to a total volume (V2) of the plurality of ridges (16) is 0.7 to 1.3.

7. The tire (1) according to any one of claims 1 to 6, wherein the total volume (V1) of the plurality of line grooves (15) is less than the total volume (V2) of the plurality of ridges (16).

## Patentansprüche

1. Reifen (1), umfassend
eine Stützfläche (13), die sich von einem Laufflächen-Boden-Kontaktende (Te) in einer Reifenradialrichtung nach innen erstreckt, wobei
der Reifen (1) eine Vielzahl von Linienrillen (15), die von der Stützfläche (13) nach innen vertieft sind und sich auf der Stützfläche (13) erstrecken, und eine Vielzahl von Erhöhungen (16), die von der Stützfläche (13) nach außen vorstehen und sich auf der Stützfläche (13) erstrecken, aufweist, und
die Linienrillen (15) und die Erhöhungen (16) abwechselnd angeordnet sind, wobei die Laufflächen-Boden-Kontaktenden (Te) als Bodenkontaktpositionen an den äußersten Seiten in der Reifenaxialrichtung definiert sind, wenn eine normale Last auf den Reifen (1) in dem normalen Zustand ausgeübt wird und der Reifen (1) mit einer flachen Oberfläche in einem Sturzwinkel von 0° in Kontakt gebracht wird.

2. Reifen (1) nach Anspruch 1, wobei eine Längsrichtung jeder der Linienrillen (15) und der Erhöhungen (16) relativ zu einer Reifenumfangsrichtung geneigt ist.

3. Reifen (1) nach Anspruch 2, wobei ein Winkel (θ1) der Längsrichtung relativ zu der Reifenumfangsrichtung 20 bis 70 Grad beträgt.

4. Reifen (1) nach Anspruch 2 oder 3, wobei jede Linienrille (15) und jede Erhöhung (16), von einer Vorderseite der Stützfläche (13) aus gesehen, relativ zu der Reifenradialrichtung gebogen ist.

5. Reifen (1) nach Anspruch 1, wobei eine Längsrichtung jeder der Linienrillen (15) und der Erhöhungen (16) parallel zu einer Reifenumfangsrichtung ist.

6. Reifen (1) nach einem der Ansprüche 1 bis 5, wobei ein Verhältnis (V1/V2) eines Gesamtvolumens (V1) der Vielzahl von Linienrillen (15) zu einem Gesamtvolumen (V2) der Vielzahl von Erhöhungen (16) 0,7 bis 1,3 beträgt.

7. Reifen (1) nach einem der Ansprüche 1 bis 6, wobei das Gesamtvolumen (V1) der Vielzahl von Linienrillen (15) kleiner als das Gesamtvolumen (V2) der Vielzahl von Erhöhungen (16) ist.

## Revendications

1. Pneumatique (1) comprenant
une surface de contrefort (13) s'étendant vers l'intérieur dans une direction radiale du pneumatique depuis une extrémité de contact au sol de bande de roulement (Te), dans lequel
le pneumatique (1) a une pluralité de creux linéaires (15) évidés vers l'intérieur par rapport à la surface de contrefort (13) et s'étendant sur la surface de contrefort (13) et une pluralité de crêtes (16) se projetant vers l'extérieur depuis la surface de contrefort (13) et s'étendant sur la surface de contrefort (13), et
les creux linéaires (15) et les crêtes (16) sont agencés en alternance, les extrémités de contact au sol de bande de roulement (Te) étant définies comme des positions de contact au sol au niveau de côtés les plus à l'extérieur dans la direction axiale du pneumatique, quand une charge normale est appliquée sur le pneumatique (1) dans l'état normal et que le pneumatique (1) est amené en contact avec une surface plate sous un angle de cambrure de 0°.

2. Pneumatique (1) selon la revendication 1, dans lequel une direction longitudinale de chacun des creux linéaires (15) et de chacune des crêtes (16) est inclinée relativement à une direction circonférentielle du pneumatique.

3. Pneumatique (1) selon la revendication 2, dans lequel un angle (θ1) de la direction longitudinale relativement à la direction circonférentielle du pneumatique est de 20 à 70° degrés.

4. Pneumatique (1) selon la revendication 2 ou 3, dans lequel chaque creux linéaire (15) et chaque crête (16) sont cintrés relativement à la direction radiale du pneumatique, dans une vue depuis l'avant de la surface de contrefort (13).

5. Pneumatique (1) selon la revendication 1, dans lequel une direction longitudinale de chacun des creux linéaires (15) et de chacune des crêtes (16) est parallèle à une direction circonférentielle du pneumatique.

6. Pneumatique (1) selon l'une quelconque des revendications 1 à 5, dans lequel un rapport (V1/V2) d'un volume total (V1) de la pluralité de creux linéaires (15) sur un volume total (V2) de la pluralité de crêtes (16) est de 0,7 à 1,3.

7. Pneumatique (1) selon l'une quelconque des revendications 1 à 6, dans lequel le volume total (V1) de la pluralité de creux linéaires (15) est inférieur au volume total (V2) de la pluralité de crêtes (16).
